(19) Europäisches Patentamt / European Patent Office / Office européen des brevets

(11) **EP 4 685 907 A1**

(12) **EUROPEAN PATENT APPLICATION**
published in accordance with Art. 153(4) EPC


(43) Date of publication:
**28.01.2026 Bulletin 2026/05**

(21) Application number: **23954001.6**

(22) Date of filing: **05.12.2023**

(51) International Patent Classification (IPC):
***H01M 10/0567*** *(2010.01)* ***H01M 10/0566*** *(2010.01)*

(52) Cooperative Patent Classification (CPC):
**H01M 10/0525; H01M 10/0566; H01M 10/0567;**
Y02E 60/10

(86) International application number:
**PCT/CN2023/136452**

(87) International publication number:
**WO 2025/065868 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2023 CN 202311279087**



(71) Applicant: **Contemporary Amperex Technology Co., Limited**
**Ningde, Fujian 352100 (CN)**

(72) Inventors:
- **WANG, Yuchun**
**Ningde, Fujian 352100 (CN)**
- **WANG, Hansen**
**Ningde, Fujian 352100 (CN)**
- **ZHONG, Wei**
**Ningde, Fujian 352100 (CN)**
- **FENG, Fuxiang**
**Ningde, Fujian 352100 (CN)**
- **ZHANG, Rupeng**
**Ningde, Fujian 352100 (CN)**
- **WAN, Pan**
**Ningde, Fujian 352100 (CN)**
- **HUANG, Shengyuan**
**Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**


(54) **ELECTROLYTE, SECONDARY BATTERY AND ELECTRICAL APPARATUS**


(57) An electrolyte, a secondary battery and an electrical apparatus. The components of the electrolyte comprise a functional compound represented by formula (1). In formula (1), $T_1$-$T_3$ are each independently selected from any one of an alkyl group having 1-10 carbon atoms, an alkenyl group having 2-10 carbon atoms, an alkynyl group having 2-10 carbon atoms, and groups represented by following formulae (a)-(f). Among $T_1$-$T_3$, at least one is selected from the group represented by formula (a), and at least one is selected from the group represented by formula (b), (c), (d) or (e). In a charging/-discharging process of the electrolyte, the functional compound represented by formula (1) can capture an oxidation product and improve the toughness of a formed SEI film, thereby improving the cycle performance of a secondary battery.


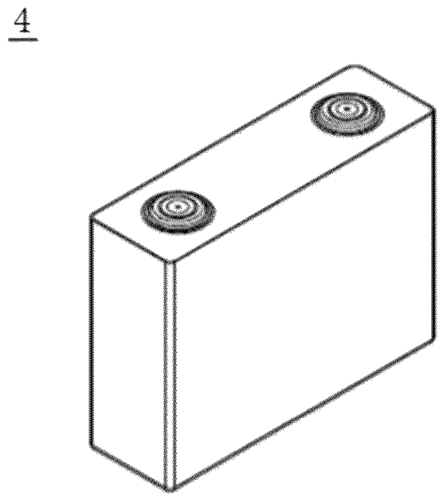


FIG. 1




Processed by Luminess, 75001 PARIS (FR)

## Description

CROSS-REFERENCE

The present application refers to Chinese Patent Application No. 202311279087.6, entitled "ELECTROLYTIC SOLUTION, SECONDARY BATTERY, AND ELECTRIC DEVICE" and filed on September 28, 2023, which is incorporated herein by reference in its entirety.

TECHNICAL FIELD

The present application relates to the technical field of batteries, and in particular, to an electrolytic solution, a secondary battery, and an electric device.

BACKGROUND

Lithium batteries and other secondary batteries have been widely used as they are clean and renewable. Lithium-ion secondary batteries have been widely applied in various fields, such as consumer electronics, electric vehicles, and energy storage.

Among them, lithium metal batteries have a high theoretical energy density and a low negative electrode potential and thus are highly promising secondary batteries. However, the performance improvement of lithium metal batteries is greatly restricted by the electrolytic solution. During the charging and discharging process, conventional electrolytic solutions often undergo the release of active oxygen, such that the electrolytic solutions are very likely to experience an oxidation reaction. This has great negative effects on key performance indexes such as the cyclicity of the battery and may easily cause safety accidents in serious cases.

Therefore, the conventional techniques are to be further improved.

SUMMARY

According to various embodiments of the present application, the present application provides an electrolytic solution, a secondary battery, and an electric device, aiming to improve the cycle performance of secondary batteries.

The present application is realized by the following technical solutions.

In a first aspect of the present application, provided is an electrolytic solution. Components of the electrolytic solution include a functional compound represented by formula (1):

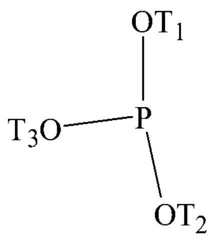

(1) ,

where $T_1$-$T_3$ are each independently selected from any one of alkyl with 1-10 carbon atoms, alkenyl with 2-10 carbon atoms, alkynyl with 2-10 carbon atoms, and groups represented by following formulas (a)-(f); among $T_1$-$T_3$, at least one is selected from the group represented by formula (a), and at least one is selected from the group represented by formula (b), formula (c), formula (d), or formula (e);

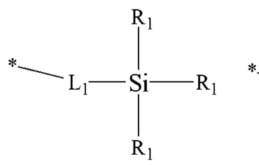 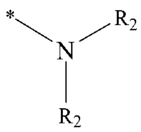 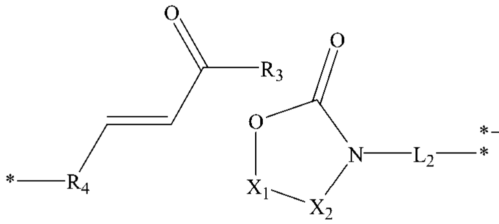 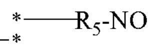 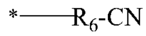

(a) (b) (c) (d) (e) (f)

,

where $R_1$-$R_3$ are each independently selected from any one of H, substituted or unsubstituted alkyl with 1-5 carbon atoms, substituted or unsubstituted alkenyl with 2-5 carbon atoms, substituted or unsubstituted alkynyl with 2-5 carbon atoms, and aryl with 6-15 ring atoms, at least one $R_1$ is not H, and at least one $R_2$ is not H;

$R_4$-$R_6$ are each independently selected from a single bond, substituted or unsubstituted alkylene with 1-5 carbon atoms, or substituted or unsubstituted alkenylene with 2-5 carbon atoms;

$L_1$ is selected from a single bond or $NR_7$, $R_7$ is selected from any one of H, substituted or unsubstituted alkyl with 1-5 carbon atoms, substituted or unsubstituted alkenyl with 2-5 carbon atoms, substituted or unsubstituted alkynyl with 2-5 carbon atoms, aryl with 6-15 ring atoms, and

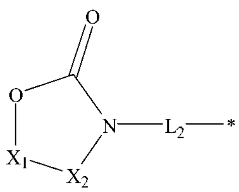

,

and $L_2$ is selected from a single bond or alkylene with 1-5 carbon atoms;

$X_1$ is $C(R_8)_2$, and $X_2$ is $C(R_9)_2$; each $R_8$ and each $R_9$ are each independently selected from any one of H, substituted or unsubstituted alkyl with 1-5 carbon atoms, substituted or unsubstituted alkenyl with 2-5 carbon atoms, and substituted or unsubstituted alkynyl with 2-5 carbon atoms;

* denotes an attachment site.

The components of the electrolytic solution described above include a functional compound with a specific structure. The compound represented by formula (1) contains a phosphite ester structural group, a silicon-containing group, and a specific structure (b), (c), (d), or (e), where the phosphite ester structural group exhibits nucleophilicity, can capture fluorine-containing byproducts formed by oxidation of the electrolytic solution, and also shows certain flame retardance; the silicon-containing group captures acidic substances formed by oxidative decomposition of the electrolytic solution and can participate in the formation of SEI films and improve the toughness of the SEI films; among (b), (c), (d), and (e), some contain nitrogen-containing functional groups with lone pair electrons, and some contain specific unsaturated structures, and all of them can not only capture acidic substances, but also are beneficial to the formation of SEI films and improving the toughness of the SEI films, and the specific structures are organically combined, so that the compound represented by formula (1) can capture oxidation products during the charging and discharging process of the electrolytic solution and meanwhile improve the toughness of the formed SEI films, thereby improving the cycle performance of the secondary battery.

In some of the embodiments, the functional compound contains a nitrogen atom.

The nitrogen atom has lone pair electrons and can promote the formation of SEI film.

In some of the embodiments, the functional compound contains at least one of

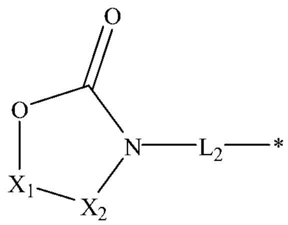

and the group represented by formula (c).

Research shows that when the compound represented by formula (1) contains

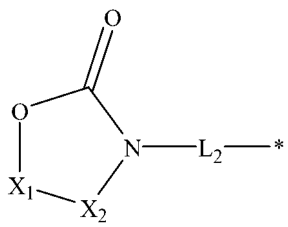

or the group represented by formula (c), the toughness of the SEI film can be further enhanced, and the cycle performance of the battery can be improved.

In some of the embodiments, $R_1$-$R_3$ are each independently selected from any one of H, alkyl with 1-5 carbon atoms, halogen-substituted alkyl with 1-5 carbon atoms, alkenyl with 2-5 carbon atoms, halogen-substituted alkenyl with 2-5 carbon atoms, alkynyl with 2-5 carbon atoms, and halogen-substituted alkynyl with 2-5 carbon atoms;

optionally, $R_1$-$R_3$ are each independently selected from any one of H, alkyl with 1-3 carbon atoms, halogen-substituted alkyl with 1-3 carbon atoms, alkenyl with 2-3 carbon atoms, halogen-substituted alkenyl with 2-3 carbon atoms, alkynyl with 2-3 carbon atoms, and halogen-substituted alkynyl with 2-3 carbon atoms.

In some of the embodiments, $R_4$-$R_6$ are each independently selected from any one of a single bond, alkylene with 1-5 carbon atoms, halogen-substituted alkylene with 1-5 carbon atoms, alkenylene with 2-5 carbon atoms, and halogen-substituted alkenylene with 2-5 carbon atoms;

optionally, $R_4$-$R_6$ are each independently selected from any one of a single bond, alkylene with 1-3 carbon atoms, halogen-substituted alkylene with 1-3 carbon atoms, alkenylene with 2-3 carbon atoms, and halogen-substituted alkenylene with 2-3 carbon atoms.

In some of the embodiments, $R_7$ is selected from any one of alkyl with 1-5 carbon atoms, halogen-substituted alkyl with 1-5 carbon atoms, and

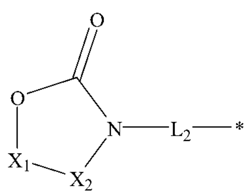

;

optionally, $R_7$ is selected from any one of alkyl with 1-3 carbon atoms, halogen-substituted alkyl with 1-3 carbon atoms, and

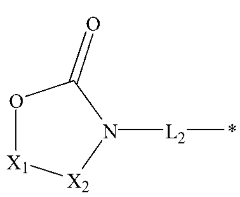

.

In some of the embodiments, each $R_8$ and each $R_9$ are each independently selected from any one of H, alkyl with 1-5 carbon atoms, halogen-substituted alkyl with 1-5 carbon atoms, alkenyl with 2-5 carbon atoms, and halogen-substituted alkenyl with 2-5 carbon atoms;

optionally, each $R_8$ and each $R_9$ are each independently selected from any one of H, alkyl with 1-3 carbon atoms, halogen-substituted alkyl with 1-3 carbon atoms, alkenyl with 2-3 carbon atoms, and halogen-substituted alkenyl with 2-3 carbon

atoms.

The functional compound includes at least one of the following (I)-(X):

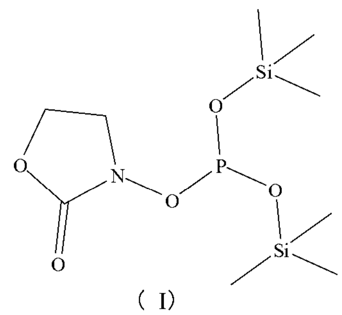
(I)

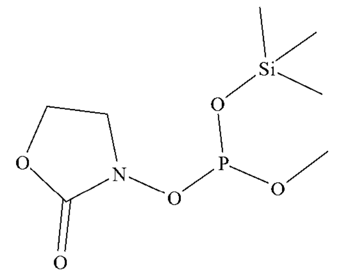
(II)

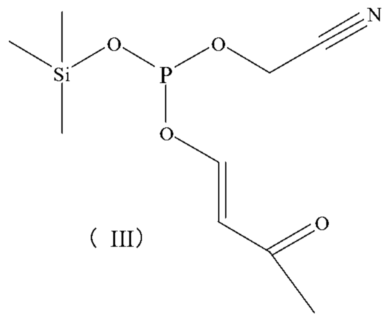
(III)

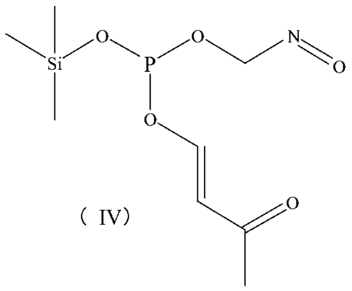
(IV)

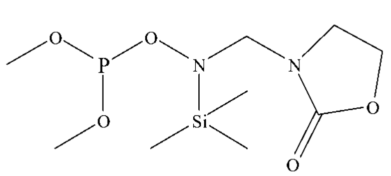
(V)

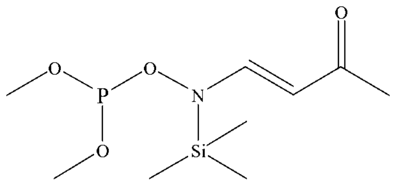
(VI)

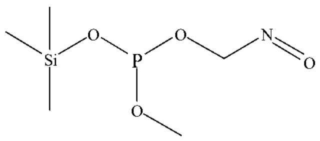
(VII)

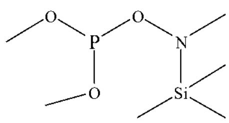
(VIII)

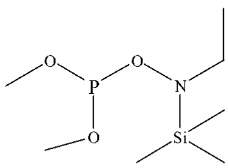
(IX)

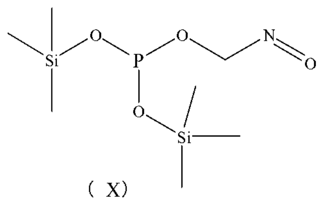
(X)

.

In some of the embodiments, the components of the electrolytic solution further include an electrolyte salt and an organic solvent;

based on the total volume of components in the electrolytic solution excluding the electrolyte salt and the functional compound, the concentration A of the functional compound satisfies: $A \geq 0.05$ mol/L;

optionally, 0.05 mol/L $\leq A \leq$ 1 mol/L;

further optionally, 0.25 mol/L $\leq A \leq$ 0.75 mol/L.

In some of the embodiments, the components of the electrolytic solution further include a film-forming agent.

In some of the embodiments, the volume ratio of the film-forming agent to the organic solvent is 1:(0.5-3); optionally, the volume ratio of the film-forming agent to the organic solvent is 1:(1-3).

The film-forming agent can synergize with the organic solvent to regulate the lithium-ion solvation structure in the electrolytic solution, form a film on the electrode surface, and improve the coulombic efficiency and cycle performance.

In some of the embodiments, the electrolyte salt includes a first electrolyte salt and a second electrolyte salt.

The first electrolyte salt includes at least one of lithium bis(fluorosulfonyl)imide and lithium hexafluorophosphate;

the second electrolyte salt includes at least one of lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluorobis(oxalato)phosphate, lithium tetrafluoro(oxalato)phosphate, and lithium difluorophosphate.

A synergistic combination of a specific first electrolyte salt and a specific second electrolyte salt is employed,

where the second electrolyte salt can regulate the deposition morphology of lithium ions and promote film formation, and exhibits high stability, which can reduce the occurrence of decomposition of components of the electrolytic solution and detrimental side reactions, further improving the cycle performance of the battery.

The electrolyte salt satisfies at least one of the following conditions (1)-(2):

(1) based on the total volume of components in the electrolytic solution excluding the electrolyte salt and the functional compound, the concentration of the first electrolyte salt is 0.5 mol/L to 4 mol/L; and

(2) based on the total volume of components in the electrolytic solution excluding the electrolyte salt and the functional compound, in the electrolytic solution, the concentration of the second electrolyte salt is 0.05 mol/L to 1.5 mol/L.

In some of the embodiments, the concentration of the first electrolyte salt is greater than the concentration of the second electrolyte salt.

The content of the first electrolyte salt and the second electrolyte salt is further regulated to fully exert the synergistic combination effect.

In a second aspect of the present application, provided is a secondary battery. The secondary battery includes the electrolytic solution according to the first aspect.

The secondary battery described above exhibits excellent cycle performance.

In a third aspect of the present application, provided is an electric device. The electric device includes the secondary battery according to the second aspect.

BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts. In the drawings:

FIG. 1 is a schematic diagram of an embodiment of a battery cell;
FIG. 2 is an exploded view of FIG. 1;
FIG. 3 is a schematic diagram of an embodiment of a battery pack;
FIG. 4 is an exploded view of FIG. 3; and
FIG. 5 is a schematic diagram of an embodiment of an electric device in which a battery is used as a power source.

Description of the reference numerals:

1, battery pack; 2, upper case body; 3, lower case body; 4, battery cell; 41, shell body; 42, electrode assembly; 43, cover plate; 5, electric device.

DETAILED DESCRIPTION

Embodiments of the technical solutions of the present application will be described in detail below with reference to the drawings. The following embodiments are only for illustrating the technical solutions of the present application more clearly and therefore are only exemplary and do not limit the claimed scope of the present application.

In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the present application, the term "alkyl" refers to a group formed by removing one hydrogen from an alkane. For example, methane loses one hydrogen to form methyl. Similarly, "alkenyl or alkynyl" refers to a group formed by removing one hydrogen from an alkene or alkyne. For example, ethylene loses one hydrogen to form ethenyl, and acetylene loses one hydrogen to form ethynyl.

In the present application, the number of carbon atoms of "alkyl with 1-10 carbon atoms" may be 1-10, including 1, 2, 3, 4, 5, 6, 7, 8, 9, and 10, and non-limiting examples thereof include methyl, ethyl, and n-propyl.

In the present application, the term "alkylene" refers to a group formed by removing two hydrogen from an alkane.

For example, methane loses two hydrogen to form methylene. Similarly, "alkenylene or alkynylene" refers to a group formed by removing two hydrogen from an alkene or alkyne. For example, ethylene loses two hydrogen to form ethenylidene, and acetylene loses two hydrogen to form ethynylene.

The term "chain alkyl" means a group formed by removing one hydrogen from an alkane where carbon atoms are all linked by carbon-carbon single bonds and are not cyclic and the other valence bonds are all attached to hydrogen, and includes linear alkane groups and branched alkane groups.

In the present application, the term "substituted or unsubstituted" means that a functional group modified by the term may or may not have a substituent.

In the present application, the halogen group includes chlorine, fluorine, bromine, and iodine.

In the present application, "aryl" refers to hydrocarbyl containing at least one aromatic ring, including non-fused ring aryl and fused ring aryl. The fused ring aryl refers to a group formed by connecting two or more aromatic rings through two adjacent ring atoms in common, that is, a fused ring.

The aromatic ring refers to a cyclic hydrocarbon compound having aromaticity, i.e., a hydrocarbon compound having a cyclic closed-loop conjugated system.

In the present application, the "number of ring atoms" indicates the number of atoms bonded to form a ring, and when the ring is substituted with a substituent, the atoms included in the substituent are not included in the ring-forming atoms. The "number of ring atoms" described below is the same unless otherwise specified. For example, the number of ring atoms of a benzene ring is 6, and the number of ring atoms of a naphthalene ring is 10.

In summary, the performance improvement of conventional secondary batteries, especially lithium metal secondary batteries, is greatly restricted by the electrolytic solution. Conventional electrolytic solutions will release such acidic byproducts as HF during the charging and discharging process. Therefore, functional additives containing silane are often used for capturing acidic substances.

However, research shows that merely capturing acidic substances offers limited improvement in battery performance, and the electrolytic solution of the present application is obtained through a great deal of experimental research.

In an embodiment of the present application, provided is an electrolytic solution. The components of the electrolytic solution include a functional compound represented by formula (1):

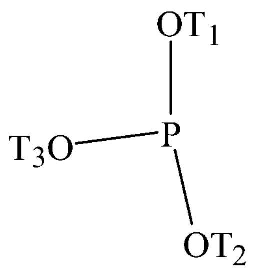

(1) ,

where $T_1$-$T_3$ are each independently selected from any one of alkyl with 1-10 carbon atoms, alkenyl with 2-10 carbon atoms, alkynyl with 2-10 carbon atoms, and groups represented by following formulas (a)-(f); among $T_1$-$T_3$, at least one is selected from the group represented by formula (a), and at least one is selected from the group represented by formula (b), formula (c), formula (d), or formula (e);

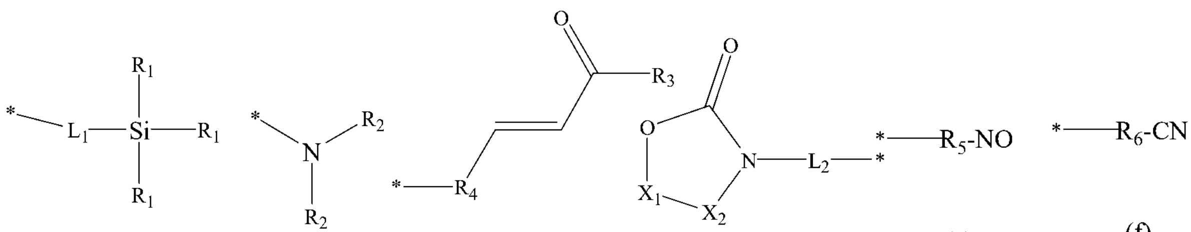

(a) (b) (c) (d) (e) (f) ,

where $R_1$-$R_3$ are each independently selected from any one of H, substituted or unsubstituted alkyl with 1-5 carbon atoms, substituted or unsubstituted alkenyl with 2-5 carbon atoms, substituted or unsubstituted alkynyl with 2-5 carbon atoms, and aryl with 6-15 ring atoms, at least one $R_1$ is not H, and at least one $R_2$ is not H;

$R_4$-$R_6$ are each independently selected from a single bond, substituted or unsubstituted alkylene with 1-5 carbon atoms, or substituted or unsubstituted alkenylene with 2-5 carbon atoms;

$L_1$ is selected from a single bond or $NR_7$, $R_7$ is selected from any one of H, substituted or unsubstituted alkyl with 1-5 carbon atoms, substituted or unsubstituted alkenyl with 2-5 carbon atoms, substituted or unsubstituted alkynyl with 2-5 carbon atoms, aryl with 6-15 ring atoms, and

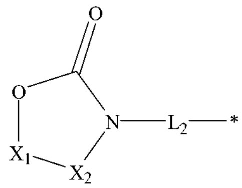

,

and $L_2$ is selected from a single bond or alkylene with 1-5 carbon atoms;

$X_1$ is $C(R_8)_2$, and $X_2$ is $C(R_9)_2$; each $R_8$ and each $R_9$ are each independently selected from any one of H, substituted or unsubstituted alkyl with 1-5 carbon atoms, substituted or unsubstituted alkenyl with 2-5 carbon atoms, and substituted or unsubstituted alkynyl with 2-5 carbon atoms;

* denotes an attachment site.

The components of the electrolytic solution described above include a functional compound with a specific structure. The compound represented by formula (1) contains a phosphite ester structural group, a silicon-containing group, and a specific structure (b), (c), (d), or (e), where the phosphite ester structural group exhibits nucleophilicity, can capture fluorine-containing byproducts formed by oxidation of the electrolytic solution, and also shows certain flame retardance; the silicon-containing group captures acidic substances formed by oxidative decomposition of the electrolytic solution and can participate in the formation of SEI films and improve the toughness of the SEI films; among (b), (c), (d), and (e), some contain nitrogen-containing functional groups with lone pair electrons, and some contain specific unsaturated structures, and all of them can not only capture acidic substances, but also are beneficial to the formation of SEI films and improving the toughness of the SEI films, and the specific structures are organically combined, so that the compound represented by formula (1) can capture oxidation products during the charging and discharging process of the electrolytic solution and meanwhile improve the toughness of the formed SEI films, thereby improving the cycle performance of the secondary battery.

In some of the embodiments, the functional compound contains a nitrogen atom.

The nitrogen atom has lone pair electrons and can promote the formation of SEI film.

It can be understood that a nitrogen-containing functional group, namely a nitrogen atom, is introduced by selecting specific types of $T_1$-$T_3$; further, the nitrogen-containing functional group may be at least one of the groups represented by formula (b), formula (d), and formula (e), or may be the group represented by formula (a) in which $L_1$ is selected from $NR_7$.

In some of the embodiments, the functional compound contains at least one of

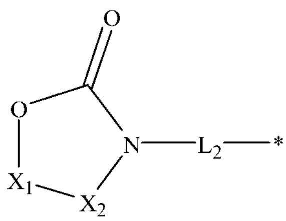

and the group represented by formula (c).

Research shows that when the compound represented by formula (1) contains

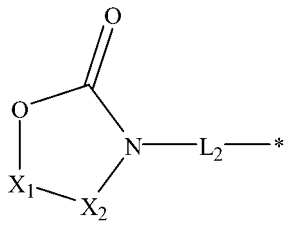

or the group represented by formula (c), the toughness of the SEI film can be further enhanced, and the cycle performance of the battery can be improved.

Similarly,

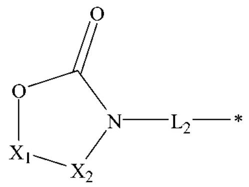

;

is introduced by selecting the specific types of $T_1$-$T_3$.

In some of the embodiments, $R_1$-$R_3$ are each independently selected from any one of H, alkyl with 1-5 carbon atoms, halogen-substituted alkyl with 1-5 carbon atoms, alkenyl with 2-5 carbon atoms, halogen-substituted alkenyl with 2-5 carbon atoms, alkynyl with 2-5 carbon atoms, and halogen-substituted alkynyl with 2-5 carbon atoms.

In some of the embodiments, $R_1$-$R_3$ are each independently selected from any one of H, chain alkyl with 1-5 carbon atoms, halogen-substituted chain alkyl with 1-5 carbon atoms, chain alkenyl with 2-5 carbon atoms, halogen-substituted chain alkenyl with 2-5 carbon atoms, alkynyl with 2-5 carbon atoms, and halogen-substituted alkynyl with 2-5 carbon atoms.

Optionally, $R_1$-$R_3$ are each independently selected from any one of H, alkyl with 1-3 carbon atoms, halogen-substituted alkyl with 1-3 carbon atoms, alkenyl with 2-3 carbon atoms, halogen-substituted alkenyl with 2-3 carbon atoms, alkynyl with 2-3 carbon atoms, and halogen-substituted alkynyl with 2-3 carbon atoms.

In some of the embodiments, $R_1$-$R_3$ are each independently selected from any one of H, chain alkyl with 1-3 carbon atoms, halogen-substituted chain alkyl with 1-3 carbon atoms, chain alkenyl with 2-3 carbon atoms, halogen-substituted chain alkenyl with 2-3 carbon atoms, alkynyl with 2-3 carbon atoms, and halogen-substituted alkynyl with 2-3 carbon atoms.

In some of the embodiments, $R_3$ is selected from any one of chain alkyl with 1-3 carbon atoms, halogen-substituted chain alkyl with 1-3 carbon atoms, chain alkenyl with 2-3 carbon atoms, halogen-substituted chain alkenyl with 2-3 carbon atoms, alkynyl with 2-3 carbon atoms, and halogen-substituted alkynyl with 2-3 carbon atoms.

In some of the embodiments, $R_1$-$R_3$ are each independently selected from any one of H, methyl, ethyl, n-propyl, isopropyl, halogen-substituted methyl, halogen-substituted ethyl, halogen-substituted n-propyl, halogen-substituted isopropyl, ethenyl, propenyl, halogen-substituted ethenyl, and halogen-substituted propenyl.

In some of the embodiments, $R_4$-$R_6$ are each independently selected from any one of a single bond, alkylene with 1-5 carbon atoms, halogen-substituted alkylene with 1-5 carbon atoms, alkenylene with 2-5 carbon atoms, and halogen-substituted alkenylene with 2-5 carbon atoms.

It can be understood that when $R_4$, $R_5$, or $R_6$ is selected from a single bond, it means that the groups at both ends of $R_4$, $R_5$, or $R_6$ are directly linked by the single bond.

In some of the embodiments, $R_4$-$R_6$ are each independently selected from any one of a single bond, chain alkylene with 1-5 carbon atoms, halogen-substituted chain alkylene with 1-5 carbon atoms, chain alkenylene with 2-5 carbon atoms, and halogen-substituted chain alkenylene with 2-5 carbon atoms.

Optionally, $R_4$-$R_6$ are each independently selected from any one of a single bond, alkylene with 1-3 carbon atoms, halogen-substituted alkylene with 1-3 carbon atoms, alkenylene with 2-3 carbon atoms, and halogen-substituted alkenylene with 2-3 carbon atoms.

In some of the embodiments, $R_4$-$R_6$ are each independently selected from any one of a single bond, chain alkylene with 1-3 carbon atoms, halogen-substituted chain alkylene with 1-3 carbon atoms, chain alkenylene with 2-3 carbon atoms, and halogen-substituted chain alkenylene with 2-3 carbon atoms.

In some of the embodiments, $R_4$-$R_6$ are each independently selected from any one of a single bond, methylene, ethylidene, propylidene, isopropylidene, halogen-substituted methylene, halogen-substituted ethylidene, halogen-substituted propylidene, halogen-substituted isopropylidene, ethenylidene, propenylidene, halogen-substituted ethenylidene, and halogen-substituted propenylidene.

In some of the embodiments, $R_7$ is selected from any one of alkyl with 1-5 carbon atoms, halogen-substituted alkyl with 1-5 carbon atoms, and

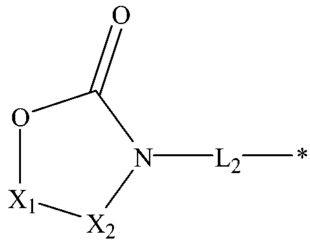

.

In some of the embodiments, $R_7$ is selected from any one of chain alkyl with 1-5 carbon atoms, halogen-substituted chain alkyl with 1-5 carbon atoms, and

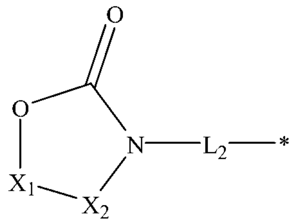

.

Optionally, $R_7$ is selected from any one of alkyl with 1-3 carbon atoms, halogen-substituted alkyl with 1-3 carbon atoms, and

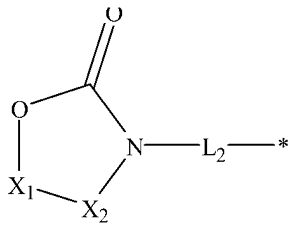

.

In some of the embodiments, $R_7$ is selected from any one of chain alkyl with 1-3 carbon atoms, halogen-substituted chain alkyl with 1-3 carbon atoms, and

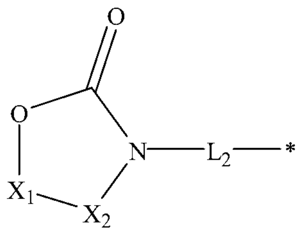

.

In some of the embodiments, $R_7$ is selected from any one of methyl, ethyl, propyl, isopropyl, halogen-substituted methyl, halogen-substituted ethyl, halogen-substituted propyl, halogen-substituted isopropyl, and

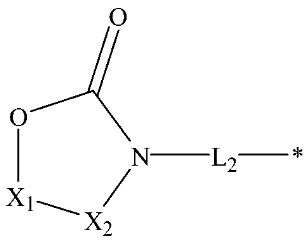

.

In some of the embodiments, $L_2$ is selected from a single bond or a chain alkylene with 1-5 carbon atoms.

In some of the embodiments, $L_2$ is selected from a single bond or alkylene with 1-3 carbon atoms.

In some of the embodiments, $L_2$ is selected from a single bond or a chain alkylene with 1-3 carbon atoms.

In some of the embodiments, in some of the embodiments, $L_2$ is selected from a single bond, methyl, ethyl, n-propyl, or isopropyl.

In some of the embodiments, each $R_8$ and each $R_9$ are each independently selected from any one of H, alkyl with 1-5 carbon atoms, halogen-substituted alkyl with 1-5 carbon atoms, alkenyl with 2-5 carbon atoms, and halogen-substituted alkenyl with 2-5 carbon atoms.

In some of the embodiments, each $R_8$ and each $R_9$ are each independently selected from any one of H, chain alkyl with 1-5 carbon atoms, halogen-substituted chain alkyl with 1-5 carbon atoms, chain alkenyl with 2-5 carbon atoms, and halogen-substituted chain alkenyl with 2-5 carbon atoms.

Optionally, each $R_8$ and each $R_9$ are each independently selected from any one of H, alkyl with 1-3 carbon atoms, halogen-substituted alkyl with 1-3 carbon atoms, alkenyl with 2-3 carbon atoms, and halogen-substituted alkenyl with 2-3 carbon atoms.

In some of the embodiments, each $R_8$ and each $R_9$ are each independently selected from any one of H, chain alkyl with 1-3 carbon atoms, halogen-substituted chain alkyl with 1-3 carbon atoms, chain alkenyl with 2-3 carbon atoms, and halogen-substituted chain alkenyl with 2-3 carbon atoms.

In some of the embodiments, each $R_8$ and each $R_9$ are each independently selected from any one of H, methyl, ethyl, propyl, isopropyl, halogen-substituted methyl, halogen-substituted ethyl, halogen-substituted propyl, halogen-substituted isopropyl, ethenyl, propenyl, halogen-substituted ethenyl, and halogen-substituted propenyl.

In some of the embodiments, each $R_8$ may be identical or different.

In some of the embodiments, each $R_9$ may be identical or different.

In some of the embodiments, the functional compound includes at least one of the following (I)-(X):

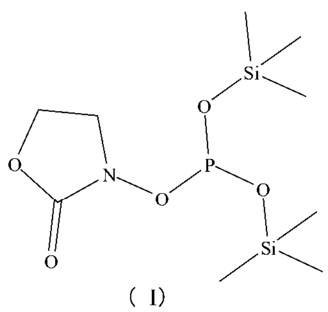
( I)

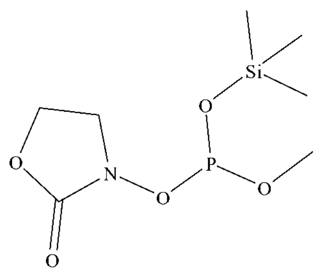
( II)

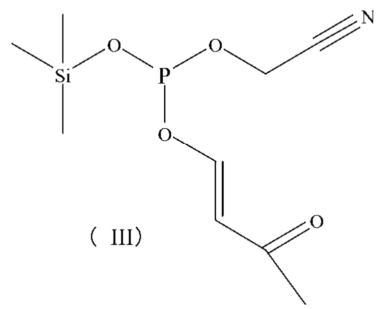
( III)

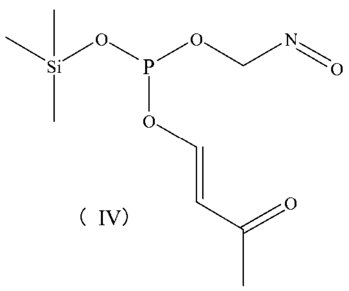
( IV)

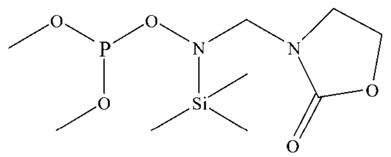
( V)

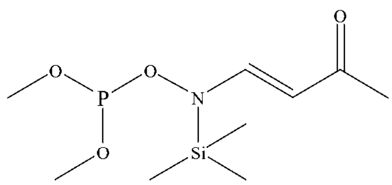
( VI)

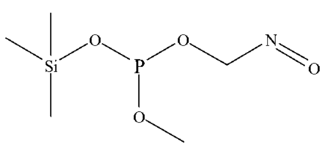
( VII)

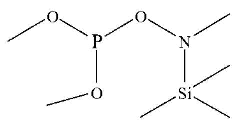
( VIII)

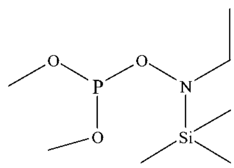
( IX)

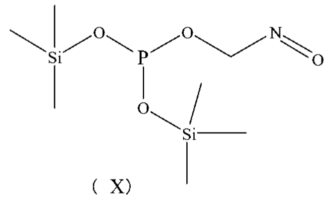
( X)

.

It should be noted that the functional compound represented by formula (1) of the present application can be

commercially available or synthesized by referring to the following preparation methods. The following takes the preparation of the compounds represented by formulas (I)-(X) as examples for illustration.

Formula (I): under a protective atmosphere, oxazolidin-2-one and tris(trimethylsilyl)phosphite are subjected to a first substitution reaction to obtain the compound of formula (I).

In some of the embodiments, the molar ratio of oxazolidin-2-one to tris(trimethylsilyl)phosphite is (0.1-0.5):1.

In some of the embodiments, the first substitution reaction is carried out at 0-5 °C; further, the time of the first substitution reaction is 10-24 h.

In some of the embodiments, after the substitution reaction is completed, a step of taking the liquid phase product for purification is further included.

Formula (II): reference is made to the preparation method of formula (I) for that of formula (II), with the only difference being that tris(trimethylsilyl)phosphite is replaced by methyl bis(trimethylsilyl)phosphite.

Formula (III): the following steps are included:

under a protective atmosphere, hydrobromic acid is added to cyanomethyl diethyl phosphite to obtain brominated bis(acetonitrilyl)ethyl phosphite.

In some of the embodiments, hydrobromic acid is added in an aqueous hydrobromic acid solution with a mass concentration of 40%-50%.

In some of the embodiments, the molar ratio of hydrobromic acid to cyanomethyl diethyl phosphite is (1-2):1.

The structures of cyanomethyl diethyl phosphite and brominated bis(acetonitrilyl)ethyl phosphite are respectively shown as the following (a) and (b):

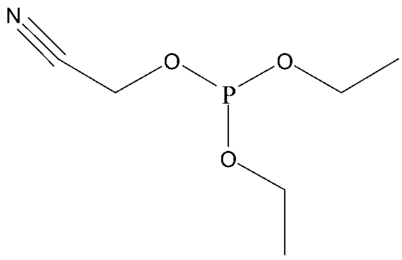

(a)

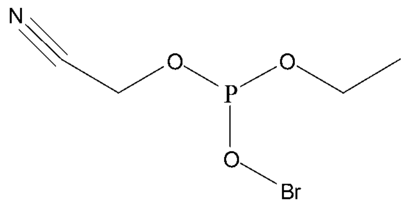

(b)

Under a protective atmosphere, bis(acetonitrilyl)ethyl phosphite is allowed to react with trimethylsilane at 0-5 °C, and the mixture is filtered to obtain bis(acetonitrilyl)trimethylsilyl phosphite.

Under a protective atmosphere, bis(acetonitrilyl)trimethylsilyl phosphite is allowed to react with (E)-4-methoxybut-3-en-2-one at 0 °C or below to obtain the formula (III).

Formula (IV): under a protective atmosphere, nitrosomethane, methyl bis(trimethylsilyl)phosphite and (E)-4-methoxybut-3-en-2-one are mixed at 0-10 °C for reaction, and the mixture is filtered to obtain the product represented by formula (IV).

In some of the embodiments, the reaction time is 10 h to 15 h.

In some of the embodiments, the molar ratio of nitrosomethane to methyl bis(trimethylsilyl)phosphite to (E)-5-methoxypent-3-en-2-one is 1:(1-2):(1-2).

Formula (V): under a protective atmosphere, ethanolamine and oxazolidin-2-one are mixed and reacted at 0-10 °C, and the mixture is filtered to obtain an intermediate product 1, where the structure is as follows:

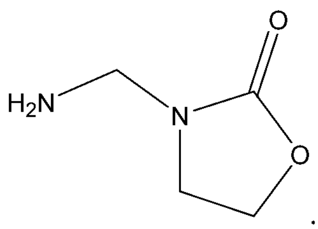

.

Optionally, the time for mixing and reacting is 10 h to 15 h.

In some of the embodiments, the molar ratio of ethanolamine to oxazolidin-2-one is 1:(1-2).

The intermediate product 1 and trimethylsilane are subjected to a second substitution reaction, and the mixture is continuously stirred for 10 h to obtain an intermediate product 2:

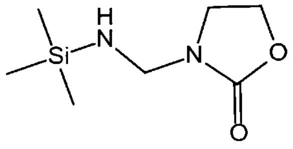 .

In some of the embodiments, the time for the second substitution reaction is 10 h to 15 h.

The intermediate product 2 and trimethyl phosphite are subjected to a substitution reaction to obtain the formula (V).

Formula (VI): under a protective atmosphere, imino(3-carbonyl-1-butenyl), trimethylsilane, and trimethyl phosphite are mixed and reacted at 0-10 °C, and the mixture is filtered to obtain the product (VI).

In some of the embodiments, the molar ratio of imino(3-carbonyl-1-butenyl), trimethylsilane, and trimethyl phosphite is 1:1:(1-2).

In some of the embodiments, the time for mixing and reacting is 10 h to 15 h.

Formula (VII): under a protective atmosphere, dimethyl(trimethylsilyl)phosphonate and nitrosomethane are mixed and reacted at 0-10 °C, and the mixture was filtered to obtain the product (VII); further, the time for mixing and reacting is 10 h to 15 h.

In some of the embodiments, the molar ratio of dimethyl(trimethylsilyl)phosphonate to nitrosomethane is (1-2):1.

Formula (VIII): under a protective atmosphere, N,N-dimethyltrimethylsilylamine and trimethyl phosphite are mixed and reacted at 0-10 °C, and the mixture is filtered to obtain the product (VIII); further, the time for mixing and reacting is 10 h to 20 h.

In some of the embodiments, the molar ratio of N,N-dimethyltrimethylsilylamine to trimethyl phosphite is 1:(1-2).

Formula (IX): under a protective atmosphere, N-methyl, N-ethyltrimethylsilylamine and 1 mol of trimethyl phosphite are mixed and reacted at 0-10 °C, and the mixture is filtered to obtain the product (IX). Further, the time for mixing and reacting is 10 h to 20 h.

In some of the embodiments, the molar ratio of N-methyl, N-ethyltrimethylsilylamine to trimethyl phosphite is 1:(1-2).

Formula (X): under a protective atmosphere, nitrosomethane and methyl bis(trimethylsilyl)phosphite are mixed and reacted at 0-10 °C, and the mixture is filtered to obtain the product (X). Further, the time for mixing and reacting is 10 h to 20 h.

In some of the embodiments, the molar ratio of nitrosomethane to methyl bis(trimethylsilyl)phosphite is 1:(1-2).

In the present application, the functional compounds represented by formula (1) can be prepared with reference to the preparation described above.

In the present application, the "protective atmosphere" may be at least one of an inert gas and nitrogen.

Specifically, the "protective atmosphere" described above includes at least one of argon and nitrogen.

In some of the embodiments, the components of the electrolytic solution further include an electrolyte salt and an organic solvent.

In some of the embodiments, based on the total volume of components in the electrolytic solution excluding the electrolyte salt and the functional compound, the concentration A of the functional compound satisfies: A ≥ 0.05 mol/L.

In some of the embodiments, 0.05 mol/L ≤ A ≤ 1 mol/L.

In some of the embodiments, 0.25 mol/L ≤ A ≤ 0.75 mol/L.

The concentration of the functional compound is regulated to further improve the toughness of the formed SEI film, thereby improving the cycle performance of the secondary battery.

In the expression "0.05 mol/L ≤ A ≤ 1 mol/L" described above, the values of A include the minimum value and the maximum value of the range and each value between the minimum value and the maximum value, and specific examples include, but are not limited to, the point values in the embodiments and the following point values: 0.05 mol/L, 0.1 mol/L, 0.15 mol/L, 0.2 mol/L, 0.25 mol/L, 0.3 mol/L, 0.35 mol/L, 0.4 mol/L, 0.45 mol/L, 0.5 mol/L, 0.55 mol/L, 0.6 mol/L, 0.65 mol/L, 0.7 mol/L, 0.75 mol/L, 0.8 mol/L, 0.85 mol/L, 0.9 mol/L, 0.95 mol/L, 1 mol/L; or ranges formed by any two of the above values, such as 0.05 mol/L to 0.1 mol/L, 0.05 mol/L to 0.9 mol/L, 0.1 mol/L to 0.9 mol/L, 0.2 mol/L to 0.9 mol/L, 0.3 mol/L to 0.9 mol/L, 0.4 mol/L to 0.9 mol/L, 0.5 mol/L to 0.9 mol/L, 0.6 mol/L to 0.9 mol/L, and 0.7 mol/L to 0.9 mol/L.

In some of the embodiments, the components of the electrolytic solution further include a film-forming agent.

In some of the embodiments, the volume ratio of the film-forming agent to the organic solvent is 1:(0.5-3).

In some of the embodiments, the volume ratio of the film-forming agent to the organic solvent is 1:(1-3).

The film-forming agent can synergize with the organic solvent to regulate the lithium-ion solvation structure in the electrolytic solution, form a film on the electrode surface, and improve the coulombic efficiency and cycle performance.

In the expression "1:(0.5-3)" described above, the values include the minimum value and the maximum value of the range and each value between the minimum value and the maximum value, and specific examples include, but are not limited to, the point values in the embodiments and the following point values: 1:0.5, 1:1, 1:1.5, 1:2, 1:2.5, and 1:3; or

ranges formed by any two of the above values.

In the present application, the organic solvent and the film-forming agent may be various types of organic solvents and film-forming agents commonly used in the art, and the organic solvents and film-forming agents are exemplified by non-limiting examples.

The organic solvent includes at least one of an ester solvent, an ether solvent, a sulfone solvent, and a nitrile solvent; specifically, the organic solvent includes ethyl methyl carbonate, diethyl carbonate, methyl trifluoroethyl carbonate, dimethyl carbonate, cyclohexane, benzene, toluene, p-xylene, m-xylene, o-xylene, fluorobenzene, p-difluorobenzene, m-difluorobenzene, o-difluorobenzene, trifluorotoluene, trifluoromethoxybenzene, decafluoropentane, perfluoropentanone, 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl)ether, 1,1,2,3,3,3-hexafluoropropylethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether.

In some of the embodiments, the film-forming agent includes at least one of fluoroethylene carbonate, vinylene carbonate, vinyl ethylene carbonate, and difluoroethylene carbonate.

Optionally, based on the total mass of components in the electrolytic solution excluding the electrolyte salt and the functional compound, the mass percentage of the organic solvent is greater than or equal to 20%.

The organic solvent can adjust the solvation structure in the electrolytic solution and improve the ionic conductivity.

In some of the embodiments, the electrolyte salt described above includes an electrolyte lithium salt.

In some of the embodiments, the electrolyte salt includes a first electrolyte salt and a second electrolyte salt. The first electrolyte salt includes at least one of lithium bis(fluorosulfonyl)imide and lithium hexafluorophosphate; the second electrolyte salt includes at least one of lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluorobis(oxalato)phosphate, lithium tetrafluoro(oxalato)phosphate, and lithium difluorophosphate.

A synergistic combination of a specific first electrolyte salt and a specific second electrolyte salt is employed, where the second electrolyte salt can regulate the deposition morphology of lithium ions and promote film formation, and exhibits high stability, which can reduce the occurrence of decomposition of components of the electrolytic solution and detrimental side reactions, further improving the cycle performance of the battery.

In some of the embodiments, based on the total volume of components in the electrolytic solution excluding the electrolyte salt and the functional compound, the concentration of the first electrolyte salt is 0.5 mol/L to 4 mol/L.

In some of the embodiments, based on the total volume of components in the electrolytic solution excluding the electrolyte salt and the functional compound, in the electrolytic solution, the concentration of the second electrolyte salt is 0.05 mol/L to 1.5 mol/L.

In the expression "0.5 mol/L to 4 mol/L" described above, the values include the minimum value and the maximum value of the range and each value between the minimum value and the maximum value, and specific examples include, but are not limited to, the point values in the embodiments and the following point values: 0.5 mol/L, 1 mol/L, 1.5 mol/L, 2 mol/L, 2.5 mol/L, 3 mol/L, 3.5 mol/L, and 4 mol/L; or ranges formed by any two of the above values.

In the expression "0.05 mol/L to 1.5 mol/L" described above, the values include the minimum value and the maximum value of the range and each value between the minimum value and the maximum value, and specific examples include, but are not limited to, the point values in the embodiments and the following point values: 0.05 mol/L, 0.1 mol/L, 0.15 mol/L, 0.2 mol/L, 0.25 mol/L, 0.3 mol/L, 0.35 mol/L, 0.4 mol/L, 0.45 mol/L, 0.5 mol/L, 0.55 mol/L, 0.6 mol/L, 0.65 mol/L, 0.7 mol/L, 0.8 mol/L, 0.9 mol/L, 1 mol/L, 1.1 mol/L, 1.2 mol/L, 1.3 mol/L, 1.4 mol/L, and 1.5 mol/L; or ranges formed by any two of the above values.

In some of the embodiments, the concentration of the first electrolyte salt is greater than the concentration of the second electrolyte salt.

The content of the first electrolyte salt and the second electrolyte salt is further regulated to fully exert the synergistic combination effect.

In some of the embodiments, based on the total volume of components in the electrolytic solution excluding the electrolyte salt and the functional compound, the total concentration of the electrolyte salt is 0.5 mol/L to 5 mol/L.

In an embodiment of the present application, provided is a secondary battery. The secondary battery includes the electrolytic solution according to the first aspect.

In some of the embodiments, the secondary battery further includes a positive electrode plate, a negative electrode plate, and a separator.

In the present application, the positive electrode plate, the negative electrode plate, and the separator may be systems commonly used in the art, and the positive electrode plate, the negative electrode plate, and the separator are

exemplified as follows.

Positive electrode plate: the positive electrode plate includes a current collector and a positive electrode active layer loaded on the surface of the current collector.

The components of the positive electrode active layer include a positive electrode active material. The positive electrode active material may be selected from positive electrode active materials commonly used in the art, including but not limited to: a positive electrode active material for lithium-ion batteries, a positive electrode active material for sodium-ion batteries, and a positive electrode active material for potassium-ion batteries.

The positive electrode active material for lithium-ion batteries, the positive electrode active material for sodium-ion batteries, and the positive electrode active material for potassium-ion batteries are hereinafter referred to simply as a lithium-ion active material, a sodium-ion active material, and a potassium-ion active material, respectively.

Further, as an example, the lithium-ion active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (e.g., $LiCoO_2$), a lithium nickel oxide (e.g., $LiNiO_2$), a lithium manganese oxide (e.g., $LiMnO_2$ and $LiMn_2O_4$), a lithium nickel cobalt oxide, a lithium manganese cobalt oxide, a lithium nickel manganese oxide, a lithium nickel cobalt manganese oxide (e.g., $LiNi_{1/3}Co_{1/3}Mn_{1/3}O_2$ (also referred to as NCM333), $LiNi_{0.5}Co_{0.2}Mn_{0.3}O_2$ (also referred to as NCM523), $LiNi_{0.5}Co_{0.25}Mn_{0.25}O_2$ (also referred to as NCM211), $LiNi_{0.6}Co_{0.2}Mn_{0.2}O_2$ (also referred to as NCM622), $LiNi_{0.8}Co_{0.1}Mn_{0.1}O_2$ (also referred to as NCM811)), a lithium nickel cobalt aluminum oxide (e.g., $LiNi_{0.8}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also referred to as LFP)), lithium manganese phosphate (such as $LiMnPO_4$), and lithium manganese iron phosphate. In any embodiment of the present application, the molecular formula of the lithium-ion active material is $LiFe_xMn_{(1-x)}PO_4$, where x is any number of 0 to 1.

It can be understood that when x is 0, $LiFe_xMn_{(1-x)}PO_4$ is $LiMnPO_4$ lithium manganese phosphate, and when x is 1, $LiFe_xMn_{(1-x)}PO_4$ is $LiFePO_4$ lithium iron phosphate (LFP).

It should be noted that the lithium content in the above exemplified positive electrode materials refers to the content when the positive electrode material is not used; during the use of the battery, the battery will be charged and discharged repeatedly, and Li in the positive electrode active material changes during the charging and discharging process, that is, the molar subscript of Li in the positive electrode active material in the battery product does not always remain at 1, and it varies; further, the variation range may be (0-1.2).

For example, $LiFe_xMn_{(1-x)}PO_4$ may be further represented as $Li_yFe_xMn_{(1-x)}PO_4$, where y is 0-1.1.

For example, for the ternary material $Li_y(Ni_aCo_bMn_c)_{1-d}M_dO_{2-x}A_x$, y is 0.2-1.2, $a + b + c = 1$, $0 \leq d \leq 1$, $0 \leq x < 2$, M is one or more of Zr, Sr, B, Ti, Mg, Sn, and Al, and A is one or more of S, N, F, Cl, Br, and I.

During the charging and discharging process of a battery, the deintercalation and consumption of Li ions occur. The molar content of Li varies when the battery is discharged to different states. The above constraints on y encompass the molar content of Li across various charging and discharging states. Further, the battery voltage typically ranges between 2-5 V.

In any embodiment of the present application, in the positive electrode active layer, the mass percentage of the positive electrode active material is 70%-99.8%.

In any embodiment of the present application, the components of the positive electrode active layer further include a conductive agent and a binder.

The conductive agent may be any conductive agent commonly used in the art, including but not limited to at least one of graphite, carbon nanotubes, nanofibers, carbon black, and graphene. Specifically, the conductive agent may include at least one of conductive carbon black (super pll, referred to as SP), conductive graphite SFG-6, conductive graphite KS-6, acetylene black, branched superconducting carbon black Ketjen black (ECP), vapor grown carbon fiber (VGCF), carbon nanotubes (CNTs), graphene, and a composite conductive agent thereof.

The binder may be at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile-butadiene rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorinated acrylate resin.

Optionally, in the positive electrode active layer, the mass percentage of the conductive agent is 1%-20%.

Optionally, in the positive electrode active layer, the mass percentage of the binder is 1%-10%.

In some of the embodiments, the thickness of the positive electrode active layer described above is 30 $\mu$m to 200 $\mu$m.

In any embodiment of the present application, the current collector may be a metal foil or a composite current

collector. For example, as the metal foil, an aluminum foil may be used. The composite current collector may include a polymer material substrate and a metal layer formed on at least one surface of the polymer material substrate. The composite current collector may be fabricated by forming a metal material on a polymer material substrate.

In some of the embodiments, the metal material includes any one of aluminum, an aluminum alloy, nickel, a nickel alloy, titanium, a titanium alloy, silver, and a silver alloy.

In some of the embodiments, the polymer material substrate includes at least one of polypropylene (PP), polyethylene terephthalate (PET), polybutylene terephthalate (PBT), polystyrene (PS), and polyethylene (PE).

In any embodiment of the present application, the positive electrode plate may be prepared in the following manner: dispersing the components described above for preparing the positive electrode plate in a solvent to form a positive electrode slurry; and coating a current collector with the positive electrode slurry, and performing drying, cold pressing, and other processes, such that the positive electrode plate can be obtained. The solid content of the positive electrode slurry is 40 wt% to 80 wt%, and the viscosity at room temperature is adjusted to 5000 mPa·s to 25000 mPa·s. The surface of the positive electrode current collector is coated with the positive electrode slurry, and drying and cold pressing through a cold rolling mill are performed in sequence to form a positive electrode plate.

Further, the solvent includes N-methylpyrrolidone.

In some of the embodiments, the positive electrode active material contained in the positive electrode plate has an areal density of 0.018 $g/cm^2$ to 0.05 $g/cm^2$.

The areal density of the positive electrode active material = the mass of the positive electrode active material/the area of the positive electrode plate.

Negative electrode plate: the negative electrode plate may be a negative electrode plate system of various types of secondary batteries commonly used in the art. The following takes lithium-ion secondary batteries and lithium metal secondary batteries as examples for illustration, but the batteries are not limited to the following types.

In some of the embodiments, the secondary battery is a lithium metal secondary battery, and the negative electrode plate may be a well-known negative electrode plate that may be used for the lithium metal batteries in the art.

In some embodiments, the negative electrode plate is directly a lithium-containing metal plate.

In another embodiment, the negative electrode plate includes a lithium-containing metal layer and a conductive layer arranged in a stacked manner.

Further, the lithium-containing technology in the lithium-containing metal plate and the lithium-containing metal layer may be lithium metal, or may be an alloy formed by lithium metal and other metals or nonmetal elements.

Further, the other metals include at least one of tin (Sn), zinc (Zn), aluminum (Al), magnesium (Mg), silver (Ag), gold (Au), gallium (Ga), indium (In), and foil (Pt); the nonmetal elements include at least one of boron (B), carbon (C), and silicon (Si).

In some of the embodiments, the conductive layer may be a copper foil.

In any embodiment of the present application, the negative electrode plate described above may be prepared in the following manner: directly pressing the lithium-containing metal plate to obtain the negative electrode plate, or laminating the lithium-containing metal layer and the conductive layer described above to obtain the negative electrode plate.

In some of the embodiments, the secondary battery is a lithium-ion secondary battery, and the negative electrode plate may be a well-known negative electrode plate that may be used for the lithium-ion secondary batteries in the art.

In some of the embodiments, the negative electrode plate includes a current collector and a negative electrode active layer loaded on the surface of the current collector.

The components of the negative electrode active layer include a negative electrode active material.

The negative electrode active material described above may be any negative electrode active material commonly used in the present application.

In any embodiment of the present application, the negative electrode active material described above includes mesocarbon microbeads, graphite, glassy carbon, carbon nanotubes, carbon-carbon composite materials, carbon fibers, hard carbon, soft carbon, silicon-based materials, tin-based materials, magnesium-based materials, iron-based materials, lithium metal, and alloys formed by lithium metal and other metals or nonmetal elements; further, the other metals include at least one of tin (Sn), zinc (Zn), aluminum (Al), magnesium (Mg), silver (Ag), gold (Au), gallium (Ga), indium (In), and platinum (Pt); the nonmetal elements include at least one of boron (B), carbon (C), and silicon (Si).

Optionally, specific examples of the negative electrode active material described above include, but are not limited to, at least one of mesocarbon microbeads, natural graphite, artificial graphite, graphene, glassy carbon, carbon nanotubes, carbon fibers, hard carbon, soft carbon, iron oxide, tin oxide, silicon oxide, magnesium oxide, silicon-carbon composites, lithium metal, and lithium metal alloys.

In any embodiment of the present application, the mass percentage of the negative electrode active material described above in the negative electrode active layer is 70%-100%.

In any embodiment of the present application, the components of the negative electrode active layer described above further include a negative electrode conductive agent and a negative electrode binder.

In any embodiment of the present application, the negative electrode conductive agent described above may be a conductive material commonly used in the art, including but not limited to at least one of graphite, carbon nanotubes, nanofibers, carbon black, and graphene. Specifically, the negative electrode conductive agent may include at least one of conductive carbon black (super pll, referred to as SP), conductive graphite SFG-6, conductive graphite KS-6, acetylene black, branched superconducting carbon black Ketjen black (ECP), vapor grown carbon fiber (VGCF), carbon nanotubes (CNTs), graphene, and a composite conductive agent thereof.

The weight ratio of the negative electrode conductive agent in the negative electrode active layer is 0 wt% to 20 wt% based on the total weight of the negative electrode active layer.

The negative electrode binder described above may be a binder commonly used in the art and may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

The weight ratio of the negative electrode binder in the negative electrode active layer is 0 wt% to 30 wt% based on the total weight of the negative electrode active layer.

In any embodiment of the present application, the negative electrode active layer further optionally includes other auxiliary agents, for example, a thickener, such as sodium carboxymethylcellulose (CMC-Na). The weight ratio of the other auxiliary agents in the negative electrode active layer is 0 wt% to 15 wt% based on the total weight of the negative electrode active layer.

In any embodiment of the present application, the current collector in the negative electrode plate may be a metal foil or a composite current collector. For example, as the metal foil, a copper foil may be used.

The composite current collector may include a polymer material substrate and a metal layer formed on at least one surface of the polymer material substrate. The composite current collector may be fabricated by forming a metal material on a polymer material substrate.

In some of the embodiments, the metal material includes any one of aluminum, an aluminum alloy, nickel, a nickel alloy, titanium, a titanium alloy, silver, and a silver alloy.

In some of the embodiments, the polymer material substrate includes at least one of polypropylene (PP), polyethylene terephthalate (PET), polybutylene terephthalate (PBT), polystyrene (PS), and polyethylene (PE).

In any embodiment of the present application, the negative electrode plate may be prepared in the following manner: dispersing the components described above for preparing the negative electrode plate, such as the negative electrode active material, the conductive agent, the binder, and any other components, in a solvent to form a negative electrode slurry; and coating the negative electrode current collector with the negative electrode slurry, and performing drying, cold pressing, and other processes, such that the negative electrode plate can be obtained.

In some of the embodiments, the solvent described above includes, but is not limited to, water.

In some of the embodiments, the solid content of the negative electrode slurry is 30 wt% to 70 wt%, and the viscosity at 25 °C is adjusted to 2000 mPa·s to 10000 mPa·s.

In some of the embodiments, the negative electrode active material contained in the negative electrode plate has an areal density of 0.005 $g/cm^2$ to 0.03 $g/cm^2$.

The areal density of the negative electrode active material = the mass of the negative electrode active material/the area of the negative electrode plate.

Separator: the separator is disposed between the positive electrode plate and the negative electrode plate.

The present application does not particularly limit the type of the separator, and any porous-structure separator known to have good chemical stability and mechanical stability may be selected and used.

In some of the embodiments, the separator may be made of a material that includes at least one of glass fiber, non-woven fabric, polyethylene, polypropylene, and polyvinylidene difluoride.

Optionally, the separator may be a single-layer film or a multi-layer composite film. Further, when the separator is a multi-layer composite film, the materials of the layers may be the same or different.

In some of the embodiments, the thickness of the separator is 2 μm to 15 μm; optionally, the thickness of the separator is 2 μm to 13 μm.

The shape of the secondary battery of the present application may be cylindrical, prismatic, or any other shape. For example, FIG. 1 shows a battery cell 4 of a secondary battery having a prismatic structure as one example.

In some embodiments, referring to FIG. 2, the shell may include a shell body 41 and a cover plate 43. The shell body 41 may include a bottom plate and side plates connected to the bottom plate, and the bottom plate and the side plates define, in an enclosing manner, an accommodating cavity. The shell body 41 is provided with an opening in communication with the accommodating cavity, and the cover plate 43 is capable of lidding the opening to close the accommodating cavity.

The positive electrode plate, the negative electrode plate, and the separator may be subjected to a winding process or a stacking process to form an electrode assembly 42. The electrode assembly 42 is packaged in the accommodating cavity. The electrolytic solution is infiltrated into the electrode assembly 42. The number of electrode assemblies 42 included in the battery cell 4 may be one or more and may be adjusted as needed.

The secondary battery includes one or more battery cells 4.

The secondary battery may be a battery module or a battery pack; the battery module or the battery pack includes at least one battery cell. The number of the battery cells included in the battery module may be one or more, and those skilled in the art may select an appropriate number according to the application and capacity of the battery module.
FIG. 3 and FIG. 4 show a battery pack 1 as one example. The battery pack 1 includes a battery case and one or a plurality of battery cells 4 disposed in the battery case. The battery case includes an upper case body 2 and a lower case body 3. The upper case body 2 is capable of lidding the lower case body 3 to form a closed space for the battery cells 4.
The plurality of battery cells 4 may be disposed in any manner in the battery case.
The present application further provides an electric device. The electric device includes the secondary battery described above.
Further, in the electric device described above, the secondary battery may be in the form of a battery cell, or may be in the form of a battery pack resulting from further assembling.
The batteries described above or the battery pack assembled therefrom may be used as a power source for the electric device and may also be used as an energy storage unit for the electric device.
The electric device described above may be, but is not limited to, a mobile device, an electric vehicle, an electric train, a ship, a satellite, an energy storage system, and the like.
The mobile device includes, but is not limited to, a mobile phone, a notebook computer, and the like, and the electric vehicle includes, but is not limited to, a pure electric vehicle, a hybrid electric vehicle, a plug-in hybrid electric vehicle, an electric bicycle, an electric scooter, an electric golf cart, an electric truck, and the like.
FIG. 5 shows an electric device 5 as one example. The electric device 5 is a pure electric vehicle, a hybrid electric vehicle, or a plug-in hybrid electric vehicle. To meet the requirements of the electric device 5 for high power and high energy density of the secondary battery, the battery pack may be used.
As another example, the electric device may be a mobile phone, a tablet computer, a notebook computer, or the like. The device is generally required to be light and thin, and a secondary battery can thus be used as a power source.
The present application will be described below in conjunction with specific examples. However, the present application is not limited to the following examples. It should be understood that the appended claims encompass the scope of the present application, and under the guidance of the concept of the present application, those skilled in the art should recognize that certain changes of the examples of the present application shall fall within the spirit and scope of claims of the present application.
The specific examples are as follows.

Example 1

S1. Preparation of lithium metal secondary battery

(1) Preparation of electrolytic solution: the film-forming agent (difluoroethylene carbonate, DFEC), the organic solvent (ethyl methyl carbonate, EMC), 0.05 mol of the functional compound represented by formula (I), 0.1 mol of the first electrolyte salt (lithium hexafluorophosphate, $LiPF_6$), and 0.03 mol of the second electrolyte salt (lithium difluorophosphate, $LiPO_2F_2$) were fully mixed and dissolved to form a colorless and transparent electrolytic solution, where the volume ratio of the film-forming agent to the organic solvent was 1:1.5.
The concentration of the first electrolyte salt was denoted as M1, and the calculation formula is as follows:

M1 = moles of first electrolyte salt/(total volume of organic solvent and film-forming agent)

The concentration of the second electrolyte salt in the electrolytic solution was denoted as M2, and the calculation formula is as follows:

M2 = moles of second electrolyte salt/(total volume of organic solvent and film- forming agent)

The mass concentration of the functional compound was denoted as A, and the calculation formula is as follows:

A = moles of functional compound/(total volume of organic solvent and film-forming agent).

The volume ratio of the film-forming agent to the organic solvent was denoted as B, and the calculation formula is as follows:
B = volume of film-forming agent/volume of organic solvent. The details are shown in Table 1.
The structure and content of each component in the electrolytic solution were confirmed by using an ion

chromatography test.

(2) Preparation of negative electrode plate

A 50 μm lithium foil was roller-pressed on a 12 μm copper foil, and then the laminate was cut into rectangular pieces of 41 mm×51 mm for use as negative electrode plates.

(3) Preparation of positive electrode plate

The lithium-rich manganese-based positive electrode active material ($Li[Li_{0.17}Mn_{0.58}Ni_{0.25}]O_2$), the conductive agent acetylene black, and the binder PVDF were mixed according to a mass ratio of 98:1:1, then the solvent N-methylpyrrolidone (NMP) was added, and the mixture was stirred until the system was uniform, thus obtaining a positive electrode slurry with a solid content of 70%; the positive electrode slurry was uniformly applied on both surfaces of the positive electrode current collector aluminum foil at a loading capacity of about 25 mg/cm$^2$, and then the aluminum foil was aired at room temperature, transferred to an oven for further drying, and then cut into rectangular pieces of 40 mm×50 mm for use as positive electrode plates.

(4) Separator: a polyethylene porous film was selected and cut into rectangular pieces of 45 mm×55 mm for later use.

(5) Assembly of lithium metal secondary battery: a pre-cut positive electrode plate was matched with a pre-cut negative electrode plate, the aforementioned separator was placed therebetween to isolate the positive and negative electrodes, and then they were wrapped in an aluminum-plastic film pouch to form a stacked dry cell; 0.3 g of the aforementioned prepared electrolytic solution was injected, and the aluminum-plastic film pouch was packaged under vacuum through hot pressing and then left to stand at room temperature for 6 h to obtain a lithium metal secondary battery with a rated capacity of 140 mAh.

S2. Cycle performance test of lithium metal secondary battery at room temperature:

The manufactured lithium metal secondary battery described above was used in the test, and the test temperature was set to be at room temperature of 25 °C. The lithium metal secondary battery was charged at a rate of 0.2C (namely 30 mA) and discharged at a rate of 1C (namely 150 mA), where the cut-off voltages for the charging and discharging were set to be 4.6 V and 2 V, respectively, and a constant-current-constant-voltage charging method was adopted in the charging process. The specific charging process is as follows: after reaching the cut-off voltage of 4.6 V under charging at a constant current of 0.2C, the lithium metal secondary battery was charged at a constant voltage of 4.6 V until the current decayed to 0.1C (namely 15 mA), and one charge-discharge was a cycle. When the discharge capacity decayed to 80% of the first-cycle discharge capacity, the service life of the battery was considered to end, and the number of cycles Cy@25 °C was recorded.

The specific results are shown in Table 1.

Examples 2-10

Examples 2-10 were substantially the same as Example 1, except that in the step (1) of preparing the electrolytic solution, the type of the functional compound was regulated to be different from that in Example 1.

The other steps and conditions were the same as those in Example 1. The test results are shown in Table 1.

Example 11

Example 11 was substantially the same as Example 1, except that in the step (1) of preparing the electrolytic solution, lithium hexafluorophosphate was replaced by lithium bis(fluorosulfonyl)imide (LiFSI) of the same molar amount.

The other steps and conditions were the same as those in Example 1. The test results are shown in Table 1.

Examples 12-16

Examples 12-16 were substantially the same as Example 1, except that in the step (1) of preparing the electrolytic solution, the amount of the functional compound was regulated to make the concentration A different from that in Example 1.

The other steps and conditions were the same as those in Example 1. The test results are shown in Table 1.

Examples 17-19

Examples 17-19 were substantially the same as Example 1, except that in the step (1) of preparing the electrolytic solution, the volume ratio B of the organic solvent to the film-forming agent was regulated to be different from that in Example 1.

The other steps and conditions were the same as those in Example 1. The test results are shown in Table 1.

Examples 20-25

Examples 20-25 were substantially the same as Example 1, except that in the step (1) of preparing the electrolytic solution, the concentration M1 of the first electrolyte salt or the mass percentage M2 of the second electrolyte salt was regulated to be different from that in Example 1.

The other steps and conditions were the same as those in Example 1. The test results are shown in Table 1.

Comparative Example 1

Comparative Example 1 was substantially the same as Example 1 except that in the step (1) of preparing the electrolytic solution, no functional compound was added.

The other steps and conditions were the same as those in Example 1. The test results are shown in Table 1.

Comparative Examples 2-5

Comparative Examples 2-5 were substantially the same as Example 1, except that in the step (1) of preparing the electrolytic solution, the type of the functional compound was different from that in Example 1.

The other steps and conditions were the same as those in Example 1. The test results are shown in Table 1.

The structures of the functional compounds used in the Examples and Comparative Examples are as follows:

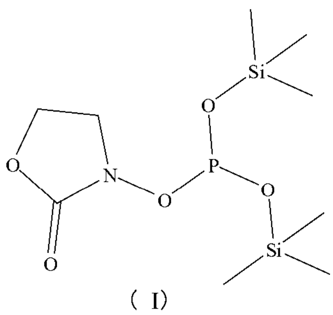

( I)

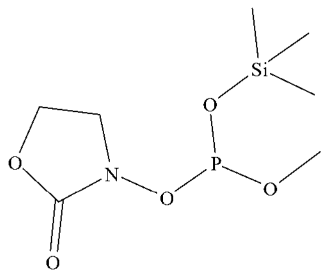

( II)

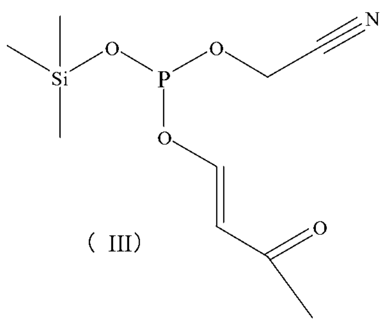

( III)

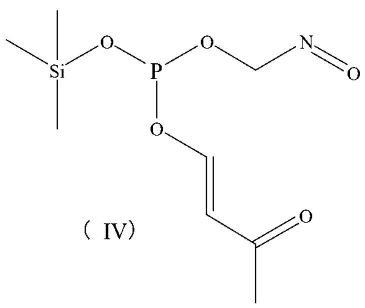

( IV)

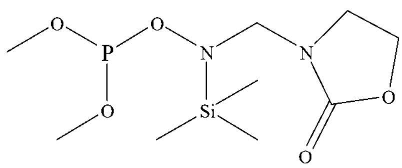

( V)

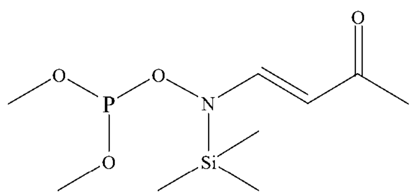

( VI)

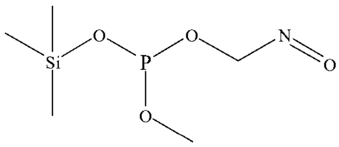
( VII)

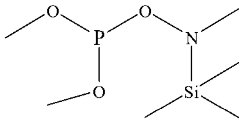
( VIII)

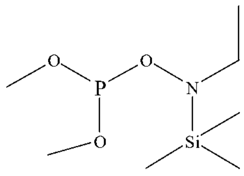
( IX)

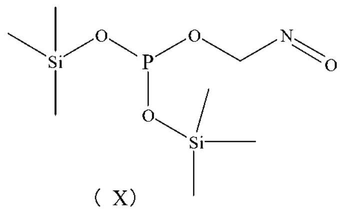
( X)

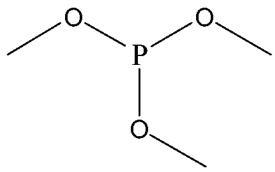
(W1)

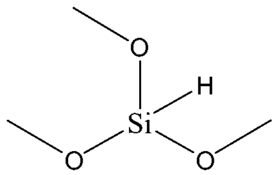
(W2)

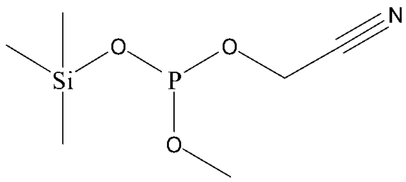
(W3)

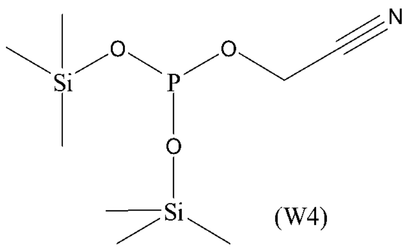
(W4)

The preparation processes of the formulas (I)-(X) are as follows:

Formula (I): under an argon atmosphere, 0.2 mol of oxazolidin-2-one was added to 1 mol of tris(trimethylsilyl) phosphite at 0-5 °C, the mixture was stirred for 1 h and reacted overnight, and then liquid was taken and purified to obtain the compound of formula (I).

Formula (II): under an argon atmosphere, 0.2 mol of oxazolidin-2-one and 1 mol of methyl bis(trimethylsilyl) phosphite were stirred and mixed at 0-5 °C for 1 h and reacted overnight, and then liquid phase was taken and purified to obtain the compound of formula (II).

Formula (III): under an argon atmosphere, 50 wt% aqueous hydrobromic acid solution (2 mol) was added to 1 mol of cyanomethyl diethyl phosphite, the mixture was continuously stirred overnight, and the product was filtered to obtain bis(acetonitrilyl) ethyl phosphite; then, still under an argon atmosphere, 1 mol of trimethylsilane was added to the product at 0-5 °C, the mixture was continuously stirred and reacted for 10 h and then filtered to obtain bis(acetonitrilyl)trimethylsilyl phosphite, (E)-4-methoxybut-3-en-2-one of the same molar amount was then added, and the mixture was continuously stirred and reacted overnight at 0 °C to obtain the compound of formula (III).

Formula (IV): under an argon atmosphere, 1 mol of nitrosomethane was added to 1.5 mol of methyl bis(trimethylsilyl)phosphite at 0-10 °C, 1 mol of (E)-4-methoxybut-3-en-2-one was then added, and the mixture was continuously stirred and reacted for 15 h and then filtered to obtain the compound of formula (IV).

Formula (V): under an argon atmosphere, 1 mol of ethanolamine and 1 mol of oxazolidin-2-one were mixed at 0-10 °C and continuously stirred and reacted for 10 h, and the mixture was filtered to obtain an intermediate product 1:

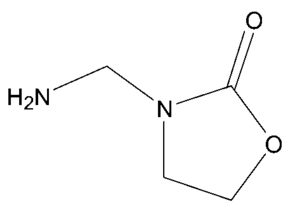
;

1 mol of trimethylsilane was added to the intermediate product 1, and the mixture was continuously stirred and reacted for 10 h to obtain an intermediate product 2:

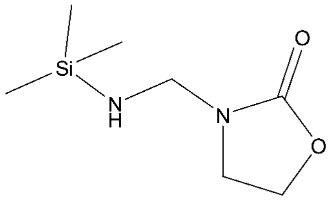

;

1 mol of trimethyl phosphite was added, and the mixture was continuously stirred and reacted for 10 h and then filtered to obtain the compound of formula (V).

Formula (VI): under an argon atmosphere, 1 mol of trimethylsilane and 1 mol of trimethyl phosphite were added to 1 mol of imino(3-carbonyl-1-butenyl) at 0-10 °C, and the mixture was continuously stirred and reacted for 10 h and then filtered to obtain a product, namely the compound of formula (VI).

Formula (VII): under an argon atmosphere, 1 mol of nitrosomethane was added to 1 mol of dimethyl(trimethylsilyl)phosphonate at 0-10 °C, and the mixture was continuously stirred and reacted for 10 h and then filtered to obtain a product, namely the compound of formula (VII).

Formula (VIII): under an argon atmosphere, 1 mol of N,N-dimethyltrimethylsilylamine and 1 mol of trimethyl phosphite were mixed and continuously stirred and reacted overnight at 0-10 °C, and the mixture was filtered to obtain the compound of formula (VIII).

Formula (IX): under an argon atmosphere, 1 mol of N-methyl, N-ethyltrimethylsilylamine and 1 mol of trimethyl phosphite were mixed and continuously stirred and reacted overnight at 0-10 °C, and the mixture was filtered to obtain the compound of formula (IX).

Formula (X): under an argon atmosphere, 1 mol of nitrosomethane and 1 mol of methyl bis(trimethylsilyl) phosphite were mixed and continuously stirred and reacted overnight at 0-10 °C, and the mixture was filtered to obtain the compound of formula (X).

The parameters and the related test results for each example and comparative example are shown in Table 1.

Table 1

| | Electrolytic solution | | | | | | | | | Battery |
|---|---|---|---|---|---|---|---|---|---|---|
| | First electrolyte salt | M1 (mol/L) | Second electrolyte salt | M2 (mol/L) | Functional compound | A (mol/L) | Film-forming agent | Organic solvent | B | Cy@25 °C (cycles) |
| Example 1 | $LiPF_6$ | 1 | $LiPO_2F_2$ | 0.3 | (I) | *0.5* | DFEC | EMC | 1:1.5 | 781 |
| Example 2 | $LiPF_6$ | 1 | $LiPO_2F_2$ | 0.3 | (II) | *0.5* | DFEC | EMC | 1:1.5 | 758 |
| Example 3 | $LiPF_6$ | 1 | $LiPO_2F_2$ | 0.3 | (III) | *0.5* | DFEC | EMC | 1:1.5 | 791 |
| Example 4 | $LiPF_6$ | 1 | $LiPO_2F_2$ | 0.3 | (IV) | *0.5* | DFEC | EMC | 1:1.5 | 765 |
| Example 5 | $LiPF_6$ | 1 | $LiPO_2F_2$ | 0.3 | (V) | *0.5* | DFEC | EMC | 1:1.5 | 799 |
| Example 6 | $LiPF_6$ | 1 | $LiPO_2F_2$ | 0.3 | (VI) | *0.5* | DFEC | EMC | 1:1.5 | 679 |
| Example 7 | $LiPF_6$ | 1 | $LiPO_2F_2$ | 0.3 | (VII) | *0.5* | DFEC | EMC | 1:1.5 | 726 |
| Example 8 | $LiPF_6$ | 1 | $LiPO_2F_2$ | 0.3 | (VIII) | *0.5* | DFEC | EMC | 1:1.5 | 657 |
| Example 9 | $LiPF_6$ | 1 | $LiPO_2F_2$ | 0.3 | (IX) | *0.5* | DFEC | EMC | 1:1.5 | 651 |
| Example 10 | $LiPF_6$ | 1 | $LiPO_2F_2$ | 0.3 | (X) | *0.5* | DFEC | EMC | 1:1.5 | 616 |
| Example 11 | LiFSI | 1 | $LiPO_2F_2$ | 0.3 | (I) | *0.5* | DFEC | EMC | 1:1.5 | 706 |
| Example 12 | $LiPF_6$ | 1 | $LiPO_2F_2$ | 0.3 | (I) | 0.75 | DFEC | EMC | 1:1.5 | 654 |
| Example 13 | $LiPF_6$ | 1 | $LiPO_2F_2$ | 0.3 | (I) | 1 | DFEC | EMC | 1:1.5 | 549 |
| Example 14 | $LiPF_6$ | 1 | $LiPO_2F_2$ | 0.3 | (I) | 0.25 | DFEC | EMC | 1:1.5 | 557 |
| Example 15 | $LiPF_6$ | 1 | $LiPO_2F_2$ | 0.3 | (I) | 0.1 | DFEC | EMC | 1:1.5 | 532 |
| Example 16 | $LiPF_6$ | 1 | $LiPO_2F_2$ | 0.3 | (I) | 0.05 | DFEC | EMC | 1:1.5 | 501 |
| Example 17 | $LiPF_6$ | 1 | $LiPO_2F_2$ | 0.3 | (I) | *0.5* | DFEC | EMC | 1:0.5 | 489 |
| Example 18 | $LiPF_6$ | 1 | $LiPO_2F_2$ | 0.3 | (I) | *0.5* | DFEC | EMC | 1:1 | 578 |
| Example 19 | $LiPF_6$ | 1 | $LiPO_2F_2$ | 0.3 | (I) | *0.5* | DFEC | EMC | 1:3 | 604 |
| Example 20 | $LiPF_6$ | 3 | $LiPO_2F_2$ | 0.47 | (I) | *0.5* | DFEC | EMC | 1:1.5 | 654 |
| Example 21 | $LiPF_6$ | 4 | $LiPO_2F_2$ | *0.05* | (I) | *0.5* | DFEC | EMC | 1:1.5 | 623 |
| Example 22 | $LiPF_6$ | 1.5 | $LiPO_2F_2$ | 0.75 | (I) | *0.5* | DFEC | EMC | 1:1.5 | 634 |
| Example 23 | $LiPF_6$ | 1.5 | $LiPO_2F_2$ | *0.5* | (I) | *0.5* | DFEC | EMC | 1:1.5 | 617 |
| Example 24 | $LiPF_6$ | *0.5* | $LiPO_2F_2$ | 1.5 | (I) | *0.5* | DFEC | EMC | 1:1.5 | 589 |

(continued)

| | Electrolytic solution | | | | | | | | | Battery |
|---|---|---|---|---|---|---|---|---|---|---|
| | First electrolyte salt | M1 (mol/L) | Second electrolyte salt | M2 (mol/L) | Functional compound | A (mol/L) | Film-forming agent | Organic solvent | B | Cy@25 °C (cycles) |
| Example 25 | $LiPF_6$ | 1.3 | / | 0 | (I) | *0.5* | DFEC | EMC | 1:1.5 | 548 |
| Comparative Example 1 | $LiPF_6$ | 1 | $LiPO_2F_2$ | 0.3 | / | 0 | DFEC | EMC | 1:1.5 | 367 |
| Comparative Example 2 | $LiPF_6$ | 1 | $LiPO_2F_2$ | 0.3 | (W1) | *0.5* | DFEC | EMC | 1:1.5 | 409 |
| Comparative Example 3 | $LiPF_6$ | 1 | $LiPO_2F_2$ | 0.3 | (W2) | *0.5* | DFEC | EMC | 1:1.5 | 403 |
| Comparative Example 4 | $LiPF_6$ | 1 | $LiPO_2F_2$ | 0.3 | (W3) | *0.5* | DFEC | EMC | 1:1.5 | 412 |
| Comparative Example 5 | $LiPF_6$ | 1 | $LiPO_2F_2$ | 0.3 | (W4) | *0.5* | DFEC | EMC | 1:1.5 | 389 |

where "/" represents the absence of the substance or the parameter.

The data in Table 1 were analyzed. As can be seen from the results of comparing the performance data of Examples 1-25 and Comparative Examples 1-5, the electrolytic solution of the present application can improve the cycle performance of secondary battery.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The aforementioned examples merely illustrate several embodiments of the present application, which are described in a specific and detailed manner, but should not be construed as limiting the patent scope of the present application. It should be noted that various changes and modifications can be made by those skilled in the art without departing from the concept of the present application, and these changes and modifications all shall fall within the protection scope of the present application. Therefore, the protection scope of this patent shall be subject to the appended claims, and the specification and drawings can be used to explain the content of the claims.

## Claims

**1.** An electrolytic solution, wherein components of the electrolytic solution comprise a functional compound represented by formula (1):

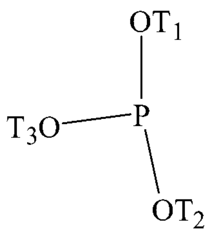

(1) ,

wherein $T_1$-$T_3$ are each independently selected from any one of alkyl with 1-10 carbon atoms, alkenyl with 2-10 carbon atoms, alkynyl with 2-10 carbon atoms, and groups represented by following formulas (a)-(f); among $T_1$-$T_3$, at least one is selected from the group represented by formula (a), and at least one is selected from the group represented by formula (b), (c), (d), or (e);

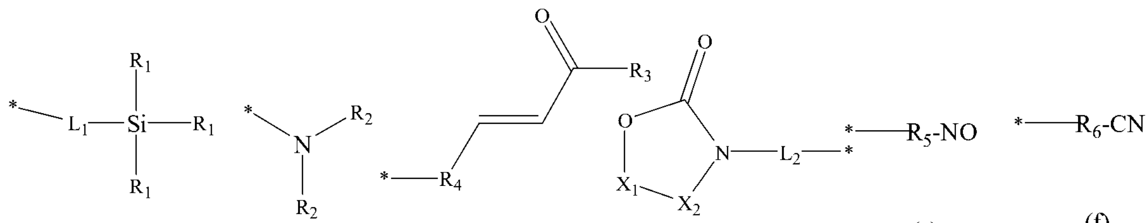

(a) (b) (c) (d) (e) (f) ,

wherein $R_1$-$R_3$ are each independently selected from any one of H, substituted or unsubstituted alkyl with 1-5 carbon atoms, substituted or unsubstituted alkenyl with 2-5 carbon atoms, substituted or unsubstituted alkynyl with 2-5 carbon atoms, and aryl with 6-15 ring atoms, at least one $R_1$ is not H, and at least one $R_2$ is not H;

$R_4$-$R_6$ are each independently selected from a single bond, substituted or unsubstituted alkylene with 1-5 carbon atoms, or substituted or unsubstituted alkenylene with 2-5 carbon atoms;

$L_1$ is selected from a single bond or $NR_7$, $R_7$ is selected from any one of H, substituted or unsubstituted alkyl with 1-5 carbon atoms, substituted or unsubstituted alkenyl with 2-5 carbon atoms, substituted or unsubstituted alkynyl with 2-5 carbon atoms, aryl with 6-15 ring atoms, and

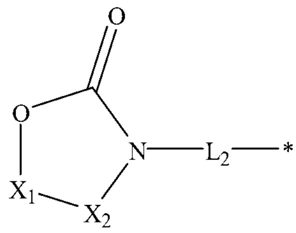

,

and $L_2$ is selected from a single bond or alkylene with 1-5 carbon atoms;
$X_1$ is $C(R_8)_2$, and $X_2$ is $C(R_9)_2$; each $R_8$ and each $R_9$ are each independently selected from any one of H, substituted or unsubstituted alkyl with 1-5 carbon atoms, substituted or unsubstituted alkenyl with 2-5 carbon atoms, and substituted or unsubstituted alkynyl with 2-5 carbon atoms;
* denotes an attachment site.

**2.** The electrolytic solution according to claim 1, wherein the functional compound comprises a nitrogen atom.

**3.** The electrolytic solution according to any one of claims 1-2, wherein the functional compound comprises at least one of

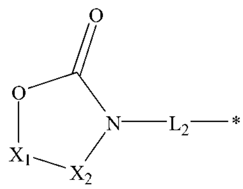

and the group represented by formula (c).

**4.** The electrolytic solution according to any one of claims 1-3, wherein $R_1$-$R_3$ are each independently selected from any one of H, alkyl with 1-5 carbon atoms, halogen-substituted alkyl with 1-5 carbon atoms, alkenyl with 2-5 carbon atoms, halogen-substituted alkenyl with 2-5 carbon atoms, alkynyl with 2-5 carbon atoms, and halogen-substituted alkynyl with 2-5 carbon atoms;
optionally, $R_1$-$R_3$ are each independently selected from any one of H, alkyl with 1-3 carbon atoms, halogen-substituted alkyl with 1-3 carbon atoms, alkenyl with 2-3 carbon atoms, halogen-substituted alkenyl with 2-3 carbon atoms, alkynyl with 2-3 carbon atoms, and halogen-substituted alkynyl with 2-3 carbon atoms.

**5.** The electrolytic solution according to any one of claims 1-4, wherein $R_4$-$R_6$ are each independently selected from any one of a single bond, alkylene with 1-5 carbon atoms, halogen-substituted alkylene with 1-5 carbon atoms, alkenylene with 2-5 carbon atoms, and halogen-substituted alkenylene with 2-5 carbon atoms;
optionally, $R_4$-$R_6$ are each independently selected from any one of a single bond, alkylene with 1-3 carbon atoms, halogen-substituted alkylene with 1-3 carbon atoms, alkenylene with 2-3 carbon atoms, and halogen-substituted alkenylene with 2-3 carbon atoms.

**6.** The electrolytic solution according to any one of claims 1-5, wherein $R_7$ is selected from any one of alkyl with 1-5 carbon atoms, halogen-substituted alkyl with 1-5 carbon atoms, and

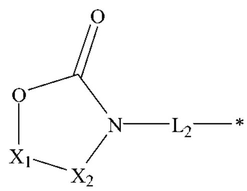

;

optionally, $R_7$ is selected from any one of alkyl with 1-3 carbon atoms, halogen-substituted alkyl with 1-3 carbon atoms, and

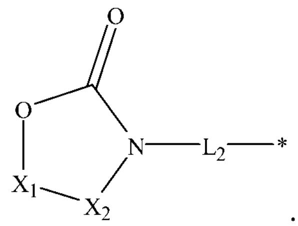

.

7. The electrolytic solution according to any one of claims 1-6, wherein each $R_8$ and each $R_9$ are each independently selected from any one of H, alkyl with 1-5 carbon atoms, halogen-substituted alkyl with 1-5 carbon atoms, alkenyl with 2-5 carbon atoms, and halogen-substituted alkenyl with 2-5 carbon atoms;
optionally, each $R_8$ and each $R_9$ are each independently selected from any one of H, alkyl with 1-3 carbon atoms, halogen-substituted alkyl with 1-3 carbon atoms, alkenyl with 2-3 carbon atoms, and halogen-substituted alkenyl with 2-3 carbon atoms.

8. The electrolytic solution according to any one of claims 1-7, wherein the functional compound comprises at least one of the following (I)-(X):

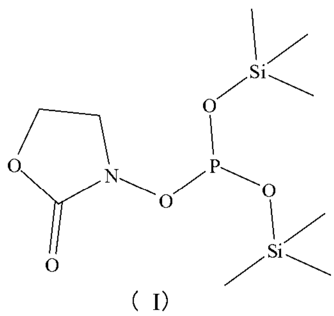

( I)

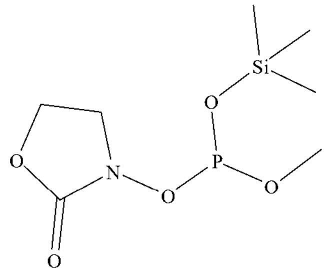

( II)

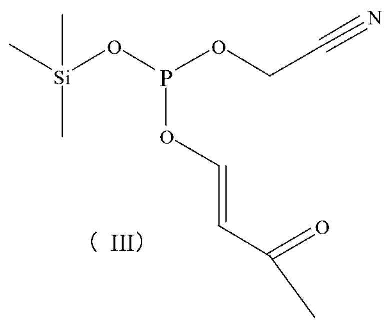

( III)

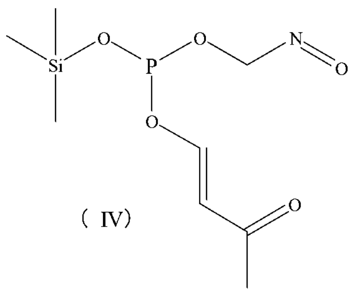

( IV)

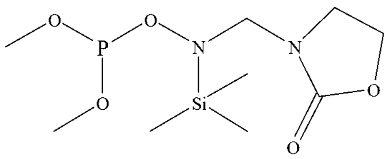

( V)

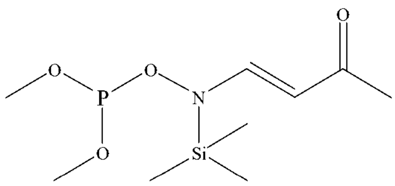

( VI)

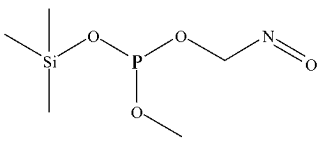

( VII)

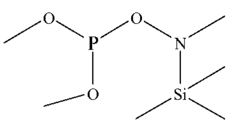

( VIII)

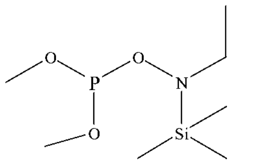

( IX)

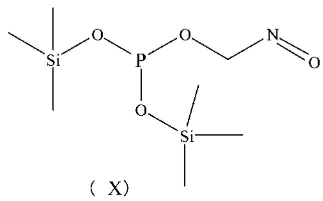

( X)

.

9. The electrolytic solution according to any one of claims 1-8, wherein the components of the electrolytic solution further comprise an electrolyte salt and an organic solvent;

based on a total volume of components in the electrolytic solution excluding the electrolyte salt and the functional compound, a concentration A of the functional compound satisfies: A ≥ 0.05 mol/L;
optionally, 0.05 mol/L ≤ A ≤ 1 mol/L;
further optionally, 0.25 mol/L ≤ A ≤ 0.75 mol/L.

**10.** The electrolytic solution according to claim 9, wherein the components of the electrolytic solution further comprise a film-forming agent.

**11.** The electrolytic solution according to claim 10, wherein a volume ratio of the film-forming agent to the organic solvent is 1:(0.5-3);
optionally, a volume ratio of the film-forming agent to the organic solvent is 1:(1-3).

**12.** The electrolytic solution according to any one of claims 9-11, wherein the electrolyte salt comprises a first electrolyte salt and a second electrolyte salt;

the first electrolyte salt comprises at least one of lithium bis(fluorosulfonyl)imide and lithium hexafluorophosphate;
the second electrolyte salt comprises at least one of lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluorobis(oxalato)phosphate, lithium tetrafluoro(oxalato) phosphate, and lithium difluorophosphate.

**13.** The electrolytic solution according to claim 12, wherein the electrolyte salt satisfies at least one of the following conditions (1)-(2):

(1) based on a total volume of components in the electrolytic solution excluding the electrolyte salt and the functional compound, a concentration of the first electrolyte salt is 0.5 mol/L to 4 mol/L; and
(2) based on a total volume of components in the electrolytic solution excluding the electrolyte salt and the functional compound, in the electrolytic solution, a concentration of the second electrolyte salt is 0.05 mol/L to 1.5 mol/L.

**14.** The electrolytic solution according to any one of claims 12-13, wherein the concentration of the first electrolyte salt is greater than the concentration of the second electrolyte salt.

**15.** A secondary battery, comprising the electrolytic solution according to any one of claims 1-14.

**16.** An electric device, comprising the secondary battery according to claim 15.

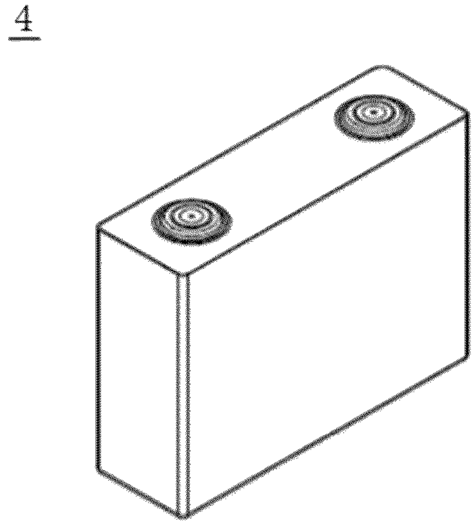


FIG. 1

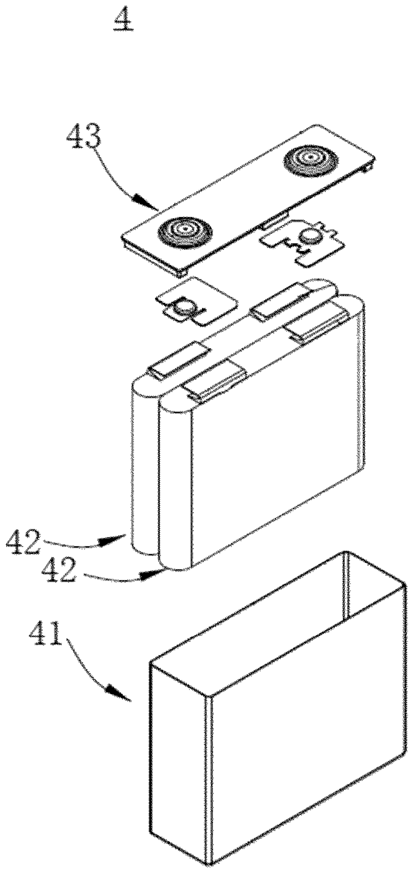


FIG. 2

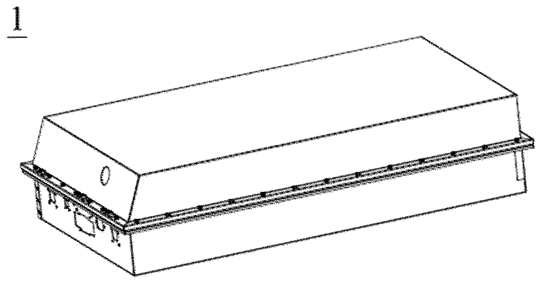


FIG. 3

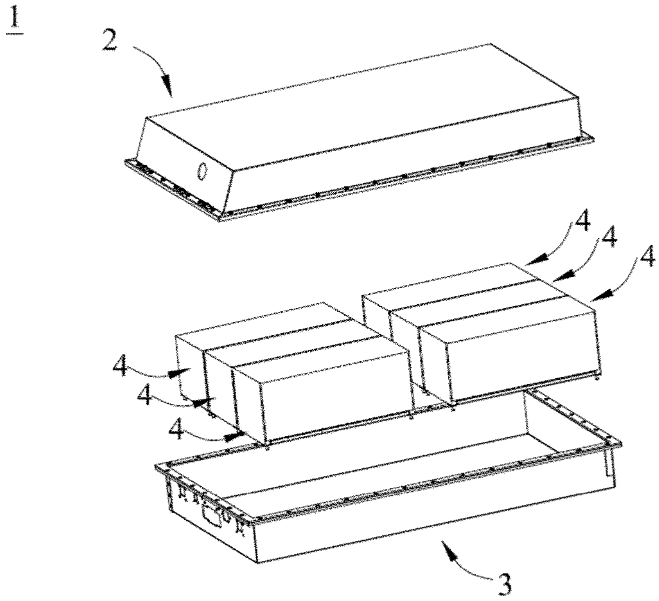


FIG. 4

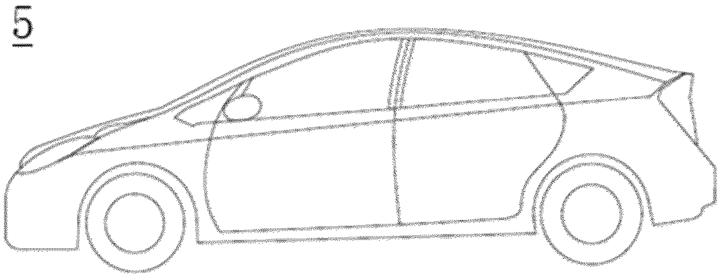


FIG. 5

## INTERNATIONAL SEARCH REPORT

International application No.
**PCT/CN2023/136452**

**A. CLASSIFICATION OF SUBJECT MATTER**

H01M10/0567(2010.01)i; H01M10/0566(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电解液, 添加剂, 亚磷酸, 硅, 氮, 胺, 氰, 腈, 不饱和键, electrolyte, additive, phosphite, silicon, nitrogen, amine, cyanogen, nitrile, unsaturated bond

**C. DOCUMENTS CONSIDERED TO BE RELEVANT**

| Category* | Citation of document, with indication, where appropriate, of the relevant passages | Relevant to claim No. |
|---|---|---|
| A | CN 116190788 A (SHENZHEN CAPCHEM TECHNOLOGY CO., LTD.) 30 May 2023 (2023-05-30)<br>description, paragraphs 4-41 | 1-16 |
| A | CN 109994780 A (CONTEMPORARY AMPEREX TECHNOLOGY CO., LTD.) 09 July 2019 (2019-07-09)<br>description, paragraphs 12-30 | 1-16 |
| A | CN 110931862 A (HEFEI GUOXUAN HIGH-TECH POWER ENERGY CO., LTD.) 27 March 2020 (2020-03-27)<br>entire document | 1-16 |
| A | KR 20160049077 A (KOREA ELECTRONICS TECHNOLOGY INSTITUTE) 09 May 2016 (2016-05-09)<br>entire document | 1-16 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 May 2024** | **24 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/136452**

| Patent document cited in search report | | | Publication date (day/month/year) | Patent family member(s) | | | Publication date (day/month/year) |
|---|---|---|---|---|---|---|---|
| CN | 116190788 | A | 30 May 2023 | None | | | |
| CN | 109994780 | A | 09 July 2019 | CN | 109994780 | B | 11 December 2020 |
| CN | 110931862 | A | 27 March 2020 | CN | 110931862 | B | 11 March 2022 |
| KR | 20160049077 | A | 09 May 2016 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311279087